# EUROPEAN PATENT SPECIFICATION

(11) **EP 1 813 791 B1**
(45) Date of publication and mention of the grant of the patent: **13.03.2013**
(21) Application number: 06001610.2
(22) Date of filing: 26.01.2006
(51) Int. Cl.: F02B 75/32, F02B 41/04

(54) **Internal combustion engine**
Brennkraftmaschine
Moteur à combustion

(43) Date of publication of application: 01.08.2007
(73) Proprietor: Fjeldsted, Skuli Th., 220 Hafnarfjörour (IS)
(72) Inventor: Fjeldsted, Skuli Th., 220 Hafnarfjörour (IS)
(74) Representative: Grünecker, Kinkeldey, Stockmair & Schwanhäusser

(56) References cited:
- AT-U1- 6 175
- DE-A1- 3 129 630
- DE-U1- 20 214 880
- JP-A- 59 145 342
- US-A- 4 567 866
- PATENT ABSTRACTS OF JAPAN vol. 017, no. 233 (M-1407), 12 May 1993 (1993-05-12) & JP 04 362230 A (MITSUBISHI HEAVY IND LTD; others: 01), 15 December 1992 (1992-12-15)
- PATENT ABSTRACTS OF JAPAN vol. 1996, no. 12, 26 December 1996 (1996-12-26) & JP 08 218888 A (KUNIDA OSAMU), 27 August 1996 (1996-08-27)

## Description

The present invention relates to an internal combustion engine having at least one cylinder, at least one piston which moves up and down inside the cylinder and at least one crankshaft.

In common internal combustion engines the load is pre-ignited before the piston reaches the top dead center (TDC) or ignited at such a short time thereafter, that it produces a force contrary to the rotation of the crankshaft, or applies the force at such an unfavorable angle to the crankpin that rotates the crankshaft that it then causes reduced efficiency and undesired strain on the piston, the piston rod, the crankpin, the crankshaft and the whole engine body, which deteriorates the efficiency of the engine. On the other hand, the efficiency is also affected by the compression within the combustion chamber. An insufficient engine efficiency has to be countervailed by higher fuel consumption.

DE 202 14 880 U1 relates to a piston engine in which two pivotably connected rods are provided between a piston and a crankshaft.

JP 04-362230 relates to an engine in which a piston is connected to a crankshaft via a piston rod, a crosshead and a connecting rod.

JP 08-218888 relates to an engine in which a piston rod is connected to a planetary gear mechanism provided within a crank chamber.

AT 006 175 U1 discloses a piston machine in which a piston is connected with a crankshaft by a single piston rod. Further, a steering link is connected to the piston.

DE 31 29 630 A1 relates to an engine having two pistons within one cylinder.

US 4,567,866 relates to an engine in which a piston and a sliding guide reciprocate within one cylinder.

JP 59-145342 A relates to an engine in which a piston is provided with pairs of rolling bodies on opposite sides. The rolling bodies are pressed away from one another by spring means. It is therefore an object of the invention to improve the efficiency and/or the compression of an internal combustion engine of the above mentioned kind.

According to the invention, this object is achieved by an internal combustion engine having the features of claim 1. Via the modifier device, adjustment of the piston movement is possible. The top dead center (TDC) and/or the bottom dead center (BDC) can be affected such that the cycle time for the upward movement of the piston is larger than the time for the downward movement of the piston or vice versa. Different cycle times permit for example, an upward movement which is quicker than the downward movement of the piston. This means the load of the combustion chamber is compressed more quickly and more efficiently for reduced or no loss of compression from the TDC position to the desired ignition position thereafter to transmit the combustion force through the piston and the modifier device at a favorable angle for most efficient use of the lever force to the crankpin. The compression may even be increased from the TDC position to the desired igniting position and, depending on the gas mixture, the upward movement of the piston and thus the compression may be as quick as to cause self combustion of the gas mixture. This also means that the engine can be adapted to different requirements by adjusting the modifier device.

The modifier device comprises a piston rod assembly having at least two pivotably joined rods, one of which is connected to the piston and the other one is pivotably connected to the crankshaft. The two rod assembly is a modifier device which is simple to produce and thus permits achieving the above mentioned advantages at low costs.

The spring means is provided in the contact area of the piston rod assembly with the cylinder wall, which supports on the cylinder wall. This reduces the force applied to the cylinder wall or the bearing and thus the friction.

In a further embodiment of the invention, the length of the rod connected to the piston can be equal to or greater than the length of the rod connected to the crankshaft. By varying the length ratio of the piston rods, the positions of the top dead center (TDC) as well as the bottom dead center (BDC) can be adjusted.

Favorably, the ratio of the length of the rod connected to the piston to the length of the rod connected to the crankshaft can be in a range of about 2:1 to 3:1. This ratio permits good power transmission.

In a still further embodiment of the invention, the length of the rod connected to the piston can be less than the length of the rod connected to the crankshaft. This allows good power transmission from the piston to the crankshaft.

In addition, the ratio of the length of the rod connected to the piston to the length of the rod connected to the crankshaft may be in a range of about 1:2 to 1:3. This is also a favorable length ratio which permits good power transmission.

Advantageously, the length of the rod connected to the crankshaft can be at least equal to or greater than the diameter of the crankshaft. This ensures that the piston assembly works properly and prohibits collisions of the crank shaft with the joint of the piston rod assembly.

In a further embodiment of the invention, at least one of the rods and/or the pivotable joint can be in contact with the cylinder wall. Thus, forces acting transverse to the movements of the piston can be supported on the cylinder wall.

Favorably, a slide bearing can be provided in the contact area of the piston rod assembly and the cylinder wall. This reduces losses caused by friction of the piston rod and/or the pivotable joint with the cylinder wall.

According to a variant of the invention, the top dead center (TDC) can be displaced from the upper crest of the crankshaft on the longitudinal axis of the cylinder. This can help to prevent or to reduce the force contrary to the crankshaft rotation when the load is pre-ignited.

According to a further favorable aspect of the invention, the bottom dead center (BDC) can be displaced from the lower crest of the crankshaft on the longitudinal axis of the cylinder. This as well as the displacement of the top dead center (TDC) helps to create the difference between the upward and the downward cycle of the piston.

Advantageously, the outer diameter of the crankshaft can be equal to or smaller than the inner diameter of the cylinder. This ensures that the crankshaft is spaced apart from the cylinder edge and thus ensures a proper rotation of the crankshaft.

In the following, embodiments of the invention are described based on the following drawings.
Figure 1 shows a sectional view of a cylinder of a first embodiment of an inventive combustion engine,
Figure 2 shows the contact area of the piston rod assembly of Figure 1 with the cylinder wall in an enlarged view, and
Figure 3 shows a sectional view of a cylinder of an alternative, second embodiment of an inventive combustion engine.
Figure 4 shows a sectional view of a cylinder of an alternative third embodiment of an inventive combustion engine.

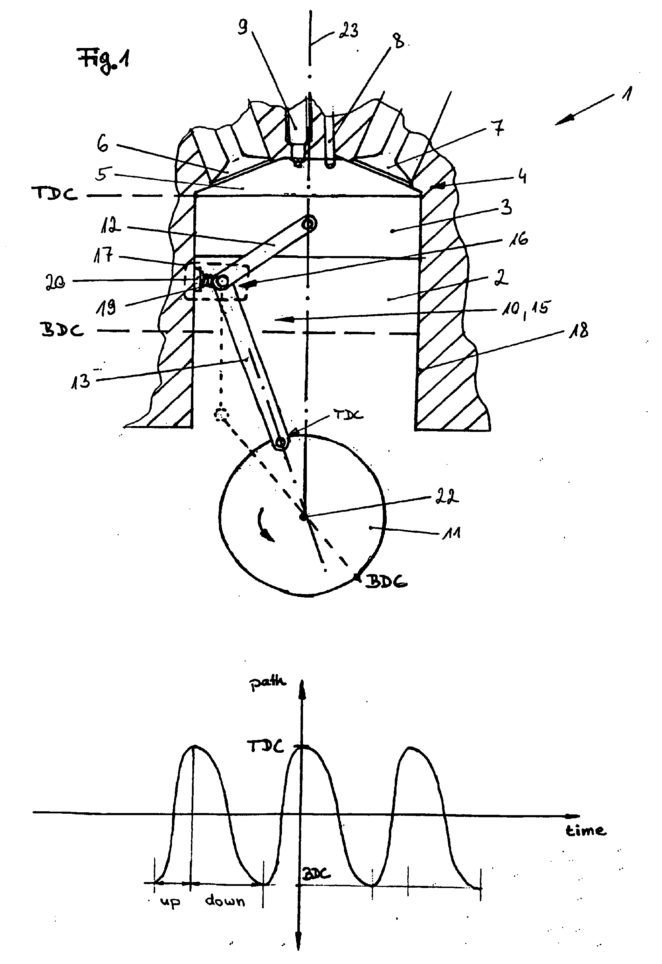

Figure 1 shows a sectional view of a cylinder 2 of an internal combustion engine 1 of a first inventive embodiment. The cylinder 2 is provided with a piston 3 capable of sliding up and down inside the cylinder 2. This piston 3 and the upper end of the cylinder 2, the cylinder head 4, form a combustion chamber 5. The cylinder head 4 is provided with inlet and outlet valves 6, 7 for air inlet and exhaust outlet, an injection nozzle 8 for fuel injection and a spark plug 9 for ignition of the gas mixture.

The piston 3 transmits the load created by the explosion of the gas mixture via a modifier device 10 to the crankshaft 11. This modifier device 10 comprises in this embodiment, a piston rod assembly 15 having two piston rods 12, 13, which are pivotably joined to each other via hinge 14. The first piston rod 12 of this embodiment is pivotably joined to the piston 3. Alternatively, the rod 12 could also be fixed to the piston or joined to the piston via a ball and socket joint. The piston rod 12 does not necessarily need to be joined to the center of the piston 3 as shown in Figure 1. Alternatively, it can be joined to any region of the piston as for example, a region near the piston wall. The second piston rod 13 of the piston rod assembly 15 is pivotably joined to the crankshaft 11.

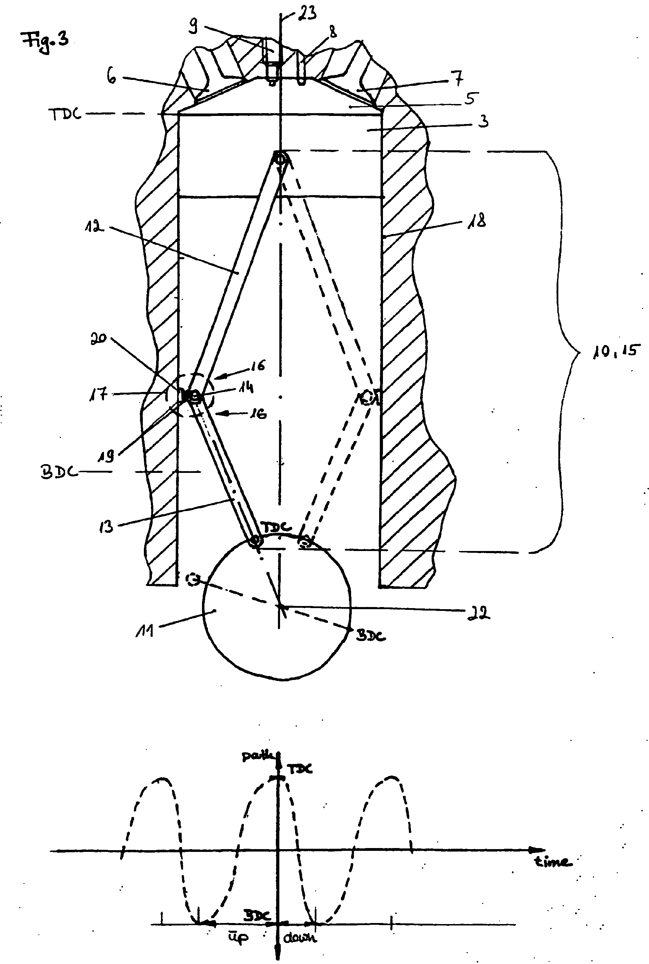

In this embodiment, the piston rod 12, joined to the piston, is shorter than the piston rod 13, joined to the crankshaft. Alternatively, the length of piston rod 12 may be equal to or longer than the length of piston rod 13, as for example shown in Figure 3.

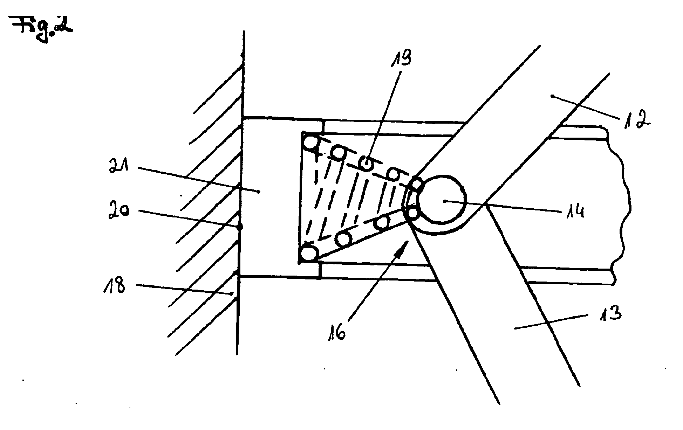

The free ends 16 of the piston rods 12, 13 are pivotably joined to each other. Alternatively, the rods 12 and 13 can be joined via any hinge, for example, a ball and socket joint. This joint 14 of the two piston rods 12, 13 supports in this embodiment on the inner wall 18 of the cylinder 2 via a spring means 19 and a slide bearing 20. Alternatively, the ends of the piston rods 12, 13 and/or the joint 14 can directly abut the cylinder wall. The contact area 17 of the piston rod assembly 15 and the cylinder wall 18 is enlargedly shown in Figure 2.

In Figure 1, the piston 3 is in its upmost position, namely in the top dead center (TDC). In this position, the piston rod 13 aligns with the center of rotation 22 of the crankshaft 11. When the piston 3 is in its lowest position, namely in the bottom dead center (BDC), the hinge 14 is shifted down too, as indicated by the dashed line. In this lowest position of the piston 3, the piston rod 13 reaches across the diameter of the crankshaft 11 and covers the center of rotation 22, namely the axis of the crankshaft 11.

In this embodiment, the ratio of the length of the piston rod 12 to the length of the piston rod 13 is in a range of about 1:2. But the length of each of the rods 12, 13 can be varied in order to adapt the upward and downward movement of the piston 3 and thus the piston velocity to certain applications and requirements, as will be described herein below. Nevertheless, the length of the piston rod 12 connected to the piston 3 must not be in excess of a certain maximum length. This length depends on several factors, such as the location in which the rod is connected to the piston as well as the length of the cylinder 2 and the height of stroke of the piston 3. Summarized, when the piston 3 is in its lowest position, namely when it reaches the bottom dead center (BDC), the length of the piston rod has to be as small as to ensure that the joint 14 of the piston rod assembly 15 still supports on the inner wall 18 of the cylinder 2.

In this embodiment, the diameter of the crankshaft 11 is smaller than the diameter of the cylinder 2. In this case, the crankshaft 11 can be positioned as near as possible to the lower edge of the cylinder 2. Since the diameter of the crankshaft 11 is smaller than the one of the cylinder 2, the crankshaft 11 could even extend a little into the cylinder 2. Alternatively, the diameter of the crankshaft 11 can be equal to the diameter of the cylinder 2. In special applications, the diameter of the crankshaft 11 can even be larger than the diameter of the cylinder 2. In these two latter cases, it is important that the edge of the crankshaft 11 is always spaced at least minimally apart from the edge of the cylinder 2 in order to prohibit a collision between the crankshaft 11 and the cylinder wall.

Figure 2 shows the contact area 17 of the piston rod assembly 15 of Figure 1 with the cylinder wall 18 in an enlarged view. Like reference signs indicate like components.

The pivot joint 14 of the piston rod assembly 15 is supported against the inner cylinder wall 18 by a spring means 19 and a slide bearing 20. In this embodiment, the spring means 19 is represented by a coil spring. Alternatively, it can be formed by any spring means known in the art, for example, a leaf spring or just a resilient or damping plastic device. The spring means 20 can abut directly on the cylinder wall 18, but in this embodiment it is mounted on a component 21 of a slide bearing 20. With its other end, the spring means 20 is directly mounted to the hinge 14. But it could also be mounted on one of the pivotably joined ends 16 of the piston rods 12, 13. The slide bearing 20 does not necessarily have to comprise a bearing ring 21 as shown in Figure 2. The slide bearing 20 can also be formed by a tribological pairing of the cylinder wall and a sliding device which slides in a guiding or is guided by any different means. Alternatively, the piston rod assembly 15 may comprise a cylindrically shaped device, for example, a bushing, which moves up and down with the movement of the hinge 14. This cylinder or bushing may be further provided with bars inside for connection to the hinge 14 and/or to one or both of the joint ends 16 of the piston rods 12, 13.

The contact area 17 may contain a device for fixing the hinge 14 on one side of the cylinder and for preventing the hinge 14 or the pivotably joined ends 16 of the piston rods 12, 13 from swinging to the opposite sidewall of the cylinder 2. In this embodiment of the invention, this function is achieved by spring means 19, which with its one end is fixed to the hinge 14 and with its other end is fixed to the component 21 of the slide bearing 20.

Figure 3 shows a sectional view of a cylinder of an alternative, second embodiment of the invention. Like references signs in Figures 1 and 2 indicate like components in Figure 3. In this embodiment the piston rod 12 connected to the piston rod 3 is longer than the piston rod 13 connected to the crankshaft 11. Particularly in this embodiment of the invention, but also in the first embodiment, it is important that the piston rod 13 connected to the crankshaft 11 is at least as long as the diameter of the crankshaft 11 plus the diameter of the joint 14 of the piston rod assembly 15.

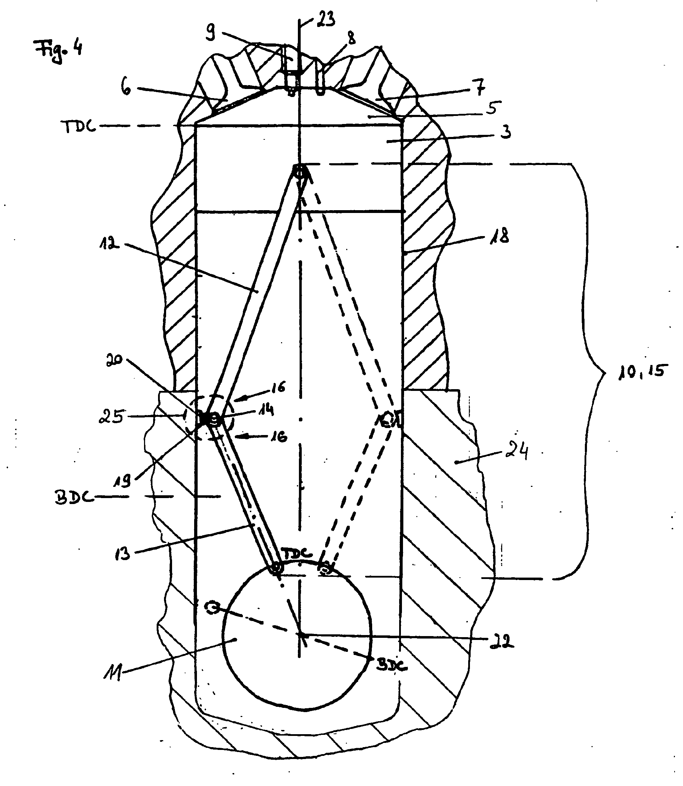

Although in the embodiments of the invention described above, the piston rod assembly abuts on the cylinder wall in contact area 17, it should be clear to a person skilled in the art that in an alternative embodiment of the invention, the piston rod assembly 15 may alternatively abut against the crankshaft housing 24 as shown in Figure 4. Like reference signs of Figure 4 indicate like components shown in Figures 1 to 3. The design of the contact area 25 and the piston rod assembly 15 is similar to the contact area 17 described in the embodiments above, except that the piston rod assembly 15 abuts on the crankshaft housing 24 instead of abutting against the cylinder wall. The advantages of this embodiment are quite the same as in the embodiments described above. But this embodiment additionally offers more space for increased lever action. Moreover, in this embodiment the outer diameter of the crankshaft 11 may even be slightly larger than the inner diameter of the cylinder 2. Provided that the center 22 of the crankshaft 11 coincides with axis 23 of the cylinder 2, the maximum outer diameter of the crankshaft 11 depends on the length of each of the piston rods 12, 13, the distance between the contact area 25 and the center 22 of the crankshaft 11 and on the inner diameter of the cylinder 2.

In the following, the mode of operation of the inventive embodiments shown in the figures will be described. Since the function of the inventive embodiments shown in Figures 1 to 3 is substantially the same, the following description relates to both embodiments.

In operation, the combustion chamber 5 of the cylinder 2 of the inventive combustion engine 1 is filled with a gas mixture, which gets ignited by a spark of the spark plug 9. The explosion forces the piston 3 down cylinder 2. This downward movement of the piston 3 is transmitted via the modifier device 10 to the crankshaft 11 where the longitudinal movement of the piston 3 is transformed into a rotation. After two further strokes for expelling the exhaust of the explosion and aspirating fresh air, the piston 3 is, driven by the rotation of the crankshaft 11, moved upward inside the cylinder 2, thereby compressing the gas in the combustion chamber 5.

In common combustion engines wherein the modifier device is formed by a single piston rod, the cycle time for the downward movement of the piston is equal to the cycle time for the upward movement of the piston. By providing two pivotably connected piston rods 12, 13 as shown in Figures 1 and 3, the cycle time for the downward movement of the piston can be adjusted to differ from the cycle time for the upward movement of the piston by varying the length of the piston rods 12, 13 as well as the diameter of the cylinder 2 and the crankshaft 11.

The top dead center (TDC) is reached when the piston rod 13, connected to the crankshaft 11, is in a straight line with the center of rotation 22 of the crankshaft 11. In common combustion engines having one piston rod, this means that the top dead center (TDC) is positioned in the upmost point of the crankshaft 11, in which the distance between the crankshaft 11 and the piston 3 is smallest. The piston rod assembly 15 of the invention always supports against the cylinder wall 18. This means the point in which the piston rod 13 and the center of rotation 22 of the crankshaft 11 are in a straight line, namely the top dead center (TDC), is displaced out of the point in which the distance of the crankshaft 11 and the piston 3 is smallest, as shown in Figure 1. When the piston 3 moves downwards, the joint 14 of the piston rod assembly 15 supported against the cylinder wall 18 is also moved downwards as indicated by the dashed line in Figure 1. The bottom dead center (BDC) is reached when the piston rod 13, connected to the crankshaft 11, covers the center of rotation 22 of the crankshaft 11 as indicated by the dashed line. In common internal combustion engines, the bottom dead center (BDC) is shifted 180 degrees in respect to the top dead center (TDC) and thus lies opposite to the top dead center (TDC). In the inventive embodiments shown in Figures 1 and 3, the circumferential distance from the top dead center (TDC) to the bottom dead center (BDC) is larger than the circumferential distance from the bottom dead center (BDC) and the top dead center (TDC).

If the crankshaft rotates uniformly, this means that the time in which the piston 3 moves from the top dead center (TDC) to the bottom dead center (BDC), namely the time for the downward movement, is larger than the time needed by the piston 3 to move from the bottom dead center (BDC) to the top dead center (TDC), namely the time for the upward movement. Since the longitudinal distance between the top dead center (TDC) and the bottom dead center (BDC) covered by the piston is the same for the upward as well as for the downward movement, this will result in a different piston velocity. This asymmetric course of the piston is shown in the path-time diagram of Figure 1. The course of this graph depends on the length ratio of the two rods 12, 13 of the piston rod assembly 15 as well as on the angles the piston rods 12, 13 form with the piston 3, the cylinder wall 18 and the crankshaft 11. In other words, the course of the graph can be adapted to different requirements by varying the length of the each of the piston rods 12, 13 and by varying the diameter of the cylinder 2 as well as the crankshaft 11. Thus an acceleration of the upward movement of the piston - and to thus an acceleration of the compression up to the point in which, depending on the gas mixture, self-combustion will take place - is possible.

By adjusting the length ratio of the piston rods 12, 13 and varying of the angles formed between the piston rods 12, 13 and the piston 3, the cylinder wall 18 and the crankshaft 11 also the force the piston rod 14 applies to the piston 3 can be adapted to diverse requirements. Due to the angled design of the piston rod assembly, it may be adjusted such that the force of the piston rod assembly 15 applied to the piston 3 is increased and losses in compression are diminished in comparison to common combustion engines having a single piston rod.

Even though only an acceleration of the compression has been discussed thus far, a reverse affection of the movement of the piston is also possible by the inventive embodiment. A deceleration of the upward movement of the piston is possible by providing the contact area 17 on the opposite side of the cylinder wall 18, namely when the position of the contact area 17 is mirrored on the longitudinal axis 23 of the cylinder 2, as indicated by the dashed line in Figure 3, or by reversing the rotation of the crankshaft.

The corresponding path-time diagram shown in dashed lines in Figure 3 also arises from mirroring the path-time diagram of Figure 1 on the path axis, or by inverting the time axis.

Due to the shifting of the top dead center (TDC) and/or the bottom dead center (BDC) and the geometry of the piston assembly, the force which acts contrary to the rotation of the crankshaft, as present in common internal combustion engines, can be reduced. Moreover, forces acting transverse to the direction of the piston movement and thus not contributing to the drive of the crankshaft 11, are supported on the cylinder wall 18.

Although the description and the drawings relate to an injection otto engine, the invention is not restricted to these engines. The invention can be applied to any internal combustion engine having at least one cylinder, one piston which moves up and down inside the cylinder, and at least one crankshaft, also for example, to an diesel engine or spark ignition engine.

## Claims

1. Internal combustion engine (1) having at least one cylinder (2), at least one piston (3) which moves up and down inside the cylinder (2), at least one crankshaft (11), and a modifier device (10) provided between the piston (3) and the crankshaft (11), the modifier device (10) comprising a piston rod assembly (15) having at least two rods (12, 13) pivotably joined to one another by a pivot joint (14), one (12) of the rods being at one end connected to the piston (3) and at the opposite end to the other rod (13) which is pivotably connected to the crankshaft (11),
the modifier device (10) affecting the movement of the piston (3) such that the downward cycle differs from the upward cycle,
**characterized in that**,
a spring means (19) supporting the pivot joint (14) is provided in the contact area (17) of the piston rod assembly (15) with the cylinder wall (18), which spring means (19) supports on the cylinder wall (18).

2. Internal combustion engine (1) of claim 1,
**characterized in that**,
the length of the rod (12) connected to the piston (3) is equal to or greater than the length of the rod (13) connected to the crankshaft (11).

3. Internal combustion engine (1) of at least one of the preceding claims,
**characterized in that**,
the ratio of the length of the rod (12) connected to the piston (3) to the length of the rod (13) connected to the crankshaft (11) is in a range of about 2:1 to 3:1.

4. Internal combustion engine (1) of claim 1,
**characterized in that**,
the length of the rod (12) connected to the piston (3) is less than the length of the rod (13) connected to the crankshaft (11).

5. Internal combustion engine (1) of at least one of the claims 1 and 4,
**characterized in that**,
the ratio of the length of the rod (12) connected to the piston (3) to the length of the rod (13) connected to the crankshaft (11) is in a range of about 1:2 to 1:3.

6. Internal combustion engine (1) of at least one of the preceding claims,
**characterized in that**,
the length of the rod (13) connected to the crankshaft (11) is at least equal to or greater than the diameter of the crankshaft (11).

7. Internal combustion engine (1) of at least one of the preceding claims,
**characterized in that**,
at least one of the rods (12, 13) and/or the pivotable joint (14) is in contact with an inner wall of the cylinder (18).

8. Internal combustion engine (1) of claim 7,
**characterized in that**,
a slide bearing (20) is provided in the contact area (17) of the piston rod assembly (15) and the cylinder wall (18).

9. Internal combustion engine (1) of at least one of the claims 1 to 6,
**characterized in that**,
at least one of the rods (12,13) and/or the pivotable joint (14) is in contact with the inner wall of the crankshaft housing (24).

10. Internal combustion engine (1) of at least one of the preceding claims,
**characterized in that**,
the top dead center (TDC) is displaced from upper crest of the crankshaft (11) on the longitudinal axis (23) of the cylinder (2).

11. Internal combustion engine (1) of at least one of the preceding claims,
**characterized in that**,
the bottom dead center (BDC) is displaced from the lower crest of the crankshaft (11) on the longitudinal axis (23) of the cylinder (2).

12. Internal combustion engine (1) of at least one of the preceding claims,
**characterized in that**,
the outer diameter of the crankshaft (11) is equal to or smaller than the inner diameter of the cylinder (2).

## Patentansprüche

1. Verbrennungsmotor (1), der wenigstens einen Zylinder (2), wenigstens einen Kolben (3), der sich im Inneren des Zylinders (2) nach oben und nach unten bewegt, wenigstens eine Kurbelwelle (11) sowie eine Modifiziereinrichtung (10) aufweist, die zwischen dem Kolben (3) und der Kurbelwelle (11) vorhanden ist, wobei die Modifiziereinrichtung (10) eine Kolbenstangen-Anordnung (15) mit wenigstens zwei Stangen (12, 13) umfasst, die über ein Drehgelenk (14) drehgelenkig miteinander verbunden sind, eine (12) der Stangen an einem Ende mit dem Kolben (3) und am gegenüberliegenden Ende mit der anderen Stange (13) verbunden ist, die drehgelenkig mit der Kurbelwelle (11) verbunden ist, und
die Modifiziereinrichtung (10) die Bewegung des Kolbens (3) so beeinflusst, dass sich der Abwärtszyklus von dem Aufwärtszyklus unterscheidet,
**dadurch gekennzeichnet, dass**
eine Federeinrichtung (19), die das Drehgelenk (14) trägt, in dem Kontaktbereich (17) der Kolbenstangen-Anordnung (15) mit der Zylinderwand (18) vorhanden ist, wobei sich die Federeinrichtung (19) an der Zylinderwand (18) abstützt.

2. Verbrennungsmotor (1) nach Anspruch 1,
**dadurch gekennzeichnet, dass**
die Länge der Stange (12), die mit dem Kolben (3) verbunden ist, genauso groß ist wie oder größer als die Länge der Stange (13), die mit der Kurbelwelle (11) verbunden ist.

3. Verbrennungsmotor (1) nach wenigstens einem der vorangehenden Ansprüche,
**dadurch gekennzeichnet, dass**
das Verhältnis der Länge der Stange (12), die mit dem Kolben (3) verbunden ist, zur Länge der Stange (13), die mit der Kurbelwelle (11) verbunden ist, im Bereich von ungefähr 2:1 bis 3:1 liegt.

4. Verbrennungsmotor (1) nach Anspruch 1,
**dadurch gekennzeichnet, dass**
die Länge der Stange (12), die mit dem Kolben (3) verbunden ist, kleiner ist als die Länge der Stange (13), die mit der Kurbelwelle (11) verbunden ist.

5. Verbrennungsmotor (1) nach wenigstens einem der Ansprüche 1 und 4,
**dadurch gekennzeichnet, dass**
das Verhältnis der Länge der Stange (12), die mit dem Kolben (3) verbunden ist, zu der Länge der Stange (13), die mit der Kurbelwelle (11) verbunden ist, in einem Bereich von ungefähr 1:2 bis 1:3 liegt.

6. Verbrennungsmotor (1) nach wenigstens einem der vorangehenden Ansprüche,
**dadurch gekennzeichnet, dass**
die Länge der Stange (13), die mit der Kurbelwelle (11) verbunden ist, wenigstens genauso groß ist wie oder größer als der Durchmesser der Kurbelwelle (11).

7. Verbrennungsmotor (1) nach wenigstens einem der vorangehenden Ansprüche,
**dadurch gekennzeichnet, dass**
wenigstens eine der Stangen (12, 13) und/oder das Drehgelenk (14) in Kontakt mit einer Innenwand des Zylinders (18) ist.

8. Verbrennungsmotor (1) nach Anspruch 7,
**dadurch gekennzeichnet, dass**
ein Gleitlager (20) in dem Kontaktbereich (17) der Kolbenstangen-Anordnung (15) mit der Zylinderwand (18) vorhanden ist.

9. Verbrennungsmotor (1) nach wenigstens einem der Ansprüche 1 bis 6,
**dadurch gekennzeichnet, dass**
wenigstens eine der Stangen (12, 13) und/oder das Drehgelenk (14) in Kontakt mit der Innenwand des Kurbelwellengehäuses (24) ist.

10. Verbrennungsmotor (1) nach wenigstens einem der vorangehenden Ansprüche,
**dadurch gekennzeichnet, dass**
der obere Totpunkt (TDC) gegenüber dem oberen Scheitel der Kurbelwelle (11) auf der Längsachse (23) des Zylinders (2) verschoben ist.

11. Verbrennungsmotor (1) nach wenigstens einem der vorangehenden Ansprüche,
**dadurch gekennzeichnet, dass**
der untere Totpunkt (BDC) gegenüber dem unteren Scheitel der Kurbelwelle (11) auf der Längsachse (23) des Zylinders (2) verschoben ist.

12. Verbrennungsmotor (1) nach wenigstens einem der vorangehenden Ansprüche,
**dadurch gekennzeichnet, dass**
der Außendurchmesser der Kurbelwelle (11) genauso groß ist wie oder kleiner als der Innendurchmesser des Zylinders (2).

## Revendications

1. Moteur à combustion interne (1) comportant au moins un cylindre (2), au moins un piston (3) se déplaçant vers le haut et vers le bas à l'intérieur du cylindre (2), au moins un vilebrequin (11) et un dispositif modificateur (10) prévu entre le piston (3) et le vilebrequin (11), le dispositif modificateur (10) comprenant un ensemble de tiges de piston (15) ayant au moins deux tiges (12, 13) reliées de manière pivotante l'une à l'autre par une jonction de pivotement (14), l'une (12) des tiges se trouvant à une extrémité reliée au piston (3) et à l'extrémité opposée à l'autre tige (13) qui est reliée de manière pivotante au vilebrequin (11),
le dispositif modificateur (10) modifiant le mouvement du piston (3) de telle sorte que le cycle vers le bas soit différent du cycle vers le haut,
**caractérisé en ce que**,
un moyen à ressort (19) supportant la jonction de pivotement (14) est prévu dans la zone de contact (17) de l'ensemble de tiges de piston (15) avec la paroi du cylindre (18), moyen à ressort (19) qui est supporté sur la paroi du cylindre (18).

2. Moteur à combustion interne (1) selon la revendication 1,
**caractérisé en ce que**,
la longueur de la tige (12) reliée au piston (3) est supérieure ou égale à la longueur de la tige (13) reliée au vilebrequin (11).

3. Moteur à combustion interne (1) selon l'une au moins des revendications précédentes,
**caractérisé en ce que**,
le rapport de la longueur de la tige (12) reliée au piston (3) à la longueur de la tige (13) reliée au vilebrequin (11) se situe dans une plage d'environ 2:1 à 3:1.

4. Moteur à combustion interne (1) selon la revendication 1,
**caractérisé en ce que**,
la longueur de la tige (12) reliée au piston (3) est inférieure à la longueur de la tige (13) reliée au vilebrequin (11).

5. Moteur à combustion interne (1) selon l'une au moins des revendications 1 et 4,
**caractérisé en ce que**,
le rapport de la longueur de la tige (12) reliée au piston (3) à la longueur de la tige (13) reliée au vilebrequin (11) se situe dans une plage d'environ 1:2 à 1:3.

6. Moteur à combustion interne (1) selon l'une au moins des revendications précédentes,
**caractérisé en ce que**,
la longueur de la tige (13) reliée au vilebrequin (11) est au moins égal ou supérieure au diamètre du vilebrequin (11).

7. Moteur à combustion interne (1) selon l'une au moins des revendications précédentes,
**caractérisé en ce que**,
au moins l'une des tiges (12, 13) et/ou la jonction pivotante (13) est en contact avec la paroi interne du cylindre (18).

8. Moteur à combustion interne (1) selon la revendication 7,
**caractérisé en ce que**,
un palier à glissement (20) est prévu dans la zone de contact (17) de l'ensemble de tiges de piston (15) et de la paroi du cylindre (18).

9. Moteur à combustion interne (1) selon l'une au moins des revendications 1 à 6,
**caractérisé en ce que**,
au moins l'une des tiges (12, 13) et/ou la jonction de pivotement (14) est en contact avec la paroi intérieure du boîtier de vilebrequin (24).

10. Moteur à combustion interne (1) selon l'une au moins des revendications précédentes,
**caractérisé en ce que**,
le point mort haut (TDC) est décalé par rapport à la crête supérieure du vilebrequin (11) sur l'axe longitudinal (23) du cylindre (2).

11. Moteur à combustion interne (1) selon l'une au moins des revendications précédentes,
**caractérisé en ce que**,
le point mort bas (BDC) est décalé par rapport à la crête inférieure du vilebrequin (11) sur l'axe longitudinal (23) du cylindre (2).

12. Moteur à combustion interne (1) selon l'une au moins des revendications précédentes,
**caractérisé en ce que**,
le diamètre extérieur du vilebrequin (11) est inférieur ou égal au diamètre intérieur du cylindre (2).
